# EUROPÄISCHE PATENTSCHRIFT

(11) **EP 1 762 860 B1**
(45) Veröffentlichungstag und Bekanntmachung des Hinweises auf die Patenterteilung: **03.06.2009**
(21) Anmeldenummer: 06120058.0
(22) Anmeldetag: 04.09.2006
(51) Int. Cl.: G01S 7/03

(54) **Radareinrichtung für ein Kraftfahrzeug und Verfahren zur Herstellung einer Radareinrichtung**
Radar device for a vehicle and a method for manufacturing a radar device
Dispositif radar pour un véhicule et un procédé de fabrication d'un dispositif radar

(30) Priorität: 09.09.2005 DE 102005042986
(43) Veröffentlichungstag der Anmeldung: 14.03.2007
(73) Patentinhaber: Hella KGaA Hueck & Co., 59552 Lippstadt (DE)
(72) Erfinder: Berrisch, Günter, 53332 Bornheim (DE); Krömer, Ralf, 59510 Lippetal (DE)

(56) Entgegenhaltungen:
- EP-A1- 0 642 190
- WO-A-00/73103
- DE-A- 19 956 262
- GB-A- 2 313 486

## Beschreibung

### STAND DER TECHNIK

Die vorliegende Erfindung betrifft eine Radareinrichtung für ein Kraftfahrzeug nach dem Oberbegriff des Anspruchs 1.

Aus dem Stand der Technik sind Radareinrichtungen für Kraftfahrzeuge in unterschiedlichen Ausführungsformen sowie entsprechende Verfahren zur Herstellung derartiger Radareinrichtungen bereits bekannt. Die bekannten Radareinrichtungen werden in Kraftfahrzeugen beispielsweise bei einer automatischen Regelung der Fahrzeuggeschwindigkeit zur Bestimmung eines Abstands des Fahrzeugs zu einem vorausfahrenden Fahrzeug eingesetzt.

Aus der DE 199 19 709 C2 ist ein Verfahren zur Herstellung eines Radoms, das für ein Radarsystem eines Kraftfahrzeugs geeignet ist, bekannt geworden. Das Radarsystem kann dabei unsichtbar hinter einem Fahrzeugemblem des Kraftfahrzeugs angebracht werden.

Die deutsche Offenlegungsschrift DE 102 35 337 A1 offenbart eine Abdeckvorrichtung für ein Kraftfahrzeug-Radar, wobei die Abdeckvorrichtung in ihrer Form und/oder in ihrer Position veränderbar ist.

Die deutsche Offenlegungsschrift DE 199 63 003 A1 zeigt ein Kraftfahrzeug-Radarsystem mit wenigstens einem sensorstrahlungsdurchlässigen Körper zur Fokussierung der Sensorstrahlung und/oder wenigstens einem Radom ohne gewollte Fokussierung im Strahlengang, wobei in den sensorstrahlungsdurchlässigen Körper und/oder in das Radom wenigstens eine Anordnung aus elektrischen Leiterbahnen eingelegt ist, wobei die Anordnung aus elektrischen Leiterbahnen aus einem ferromagnetischen Material besteht. Die elektrischen Leiterbahnen ermöglichen insbesondere eine Abschirmung von elektrischen sowie magnetischen Störfeldern.

Die aus dem Stand der Technik bekannten Radareinrichtungen haben den Nachteil, dass die Gehäuseteile des Gehäuses der Radareinrichtung bei der Montage häufig miteinander verklebt werden und damit unlösbar beziehungsweise nur sehr schwer lösbar miteinander verbunden sind. Daraus resultiert in der Praxis häufig das Problem, dass das Gehäuse der Radareinrichtung nicht mehr zerstörungsfrei geöffnet werden kann, wenn zum Beispiel ein Defekt der Sender- und Empfängermittel, die innerhalb des Gehäuses untergebracht sind, behoben werden soll. Klebeprozesse sind darüber hinaus aus fertigungstechnischer Sicht häufig kritisch. Ein weiterer Nachteil der bekannten Radareinrichtungen besteht darin, dass die Montage der Sender- und Empfängermittel häufig relativ kompliziert und aufwändig ist.

Eine Radareinrichtung der eingangs genannten Art ist aus der EP 0 642 190 A1 bekannt. Ein Trägerteil mit Sender- und Empfängermitteln ist zwischen einem ersten Gehäuseteil und einem zweiten Gehäuseteil der Radareinrichtung klemmend festgelegt.

Die GB 2 313 486 A offenbart ein Gehäuse für eine Radareinrichtung mit einem unteren Gehäuseteil sowie einem Abdeckteil, welche jeweils eine sich in Umfangsrichtung erstreckende, umlaufende Nut aufweisen, in der ein Dichtungselement angeordnet ist.

Die internationale Patentanmeldung WO 00/73103 A1 offenbart ein Gehäuse, insbesondere für einen Radarsensor, mit zwei Gehäuseteilen, die über Klippverbindungen miteinander verbunden sind. Das erste Gehäuseteil weist in Umfangsrichtung eine Mehrzahl von Haltelaschen auf, in die damit korrespondierende Haltevorsprünge, die am zweiten Gehäuseteil ausgebildet sind, eingreifen können, um beide Gehäuseteile miteinander zu verbinden.

Ein weiteres Gehäuse für eine Radareinrichtung ist aus DE 19956262 bekannt. Hier setzt die vorliegende Erfindung an.

Der vorliegenden Erfindung liegt die Aufgabe zugrunde, eine Radareinrichtung der eingangs genannten Art zur Verfügung zu stellen, die einfach zu montieren ist und bei der eine zerstörungsfreie Öffnung des Gehäuses auf einfache Weise möglich ist.

### VORTEILE DER ERFINDUNG

Hinsichtlich der Radareinrichtung wird die der vorliegenden Erfindung zugrunde liegende Aufgabe durch eine Radareinrichtung mit den Merkmalen des Anspruchs 1 gelöst. Die Unteransprüche betreffen vorteilhafte Weiterbildungen der Erfindung.

Gemäß Anspruch 1 wird vorgeschlagen, dass das mindestens eine Trägerteil zwischen dem ersten Gehäuseteil und dem zweiten Gehäuseteil klemmend festgelegt ist. Die Sender- und Empfängermittel können bereits während eines Vormontageschritts an dem mindestens einen Trägerteil angebracht werden. Die Sender- und Empfängermittel können insbesondere auf einer Leiterplatte angeordnet sein, die zum Beispiel abschnittsweise mit dem Trägerteil verklebt sein kann. Durch das Vorsehen einer Klemmverbindung sind keine zusätzlichen Befestigungsmittel für die Befestigung des Trägerteils im Inneren des Gehäuses beziehungsweise an mindestens einem der Gehäuseteile mehr erforderlich, so dass der Montageaufwand und damit auch die Kosten für die Herstellung der Radareinrichtung verringert werden können. Die erfindungsgemäße Radareinrichtung eignet sich auf Grund des kompakten Gehäuseaufbaus insbesondere auch für den Einbau in Kraftfahrzeugen, in denen der für die Radareinrichtung zur Verfügung stehende Bauraum relativ gering ist. Es wird insbesondere kein zusätzlicher Bauraum für die Gehäuseabdichtung und für die Befestigung eines Radoms benötigt. Ferner wird für die Sender- und Empfängermittel sowie für weitere elektronische Bauelemente der Radareinrichtung im Inneren des Gehäuses relativ viel Raum zur Verfügung gestellt.

Die Radareinrichtung weist erfindungsgemäß eine Anzahl von Befestigungsklammern auf, geeignet, eine lösbare Klemmverbindung zwischen dem ersten Gehäuseteil, dem mindestens einen Trägerteil und dem zweiten Gehäuseteil zur Verfügung zu stellen. Die Befestigungsklammern können nach dem Zusammensetzen der Gehäuseteile mit relativ geringem Aufwand montiert werden und ermöglichen darüber hinaus eine zuverlässige kraft- und formschlüssige und dennoch lösbare Klemmverbindung des ersten Gehäuseteils mit dem zweiten Gehäuseteil sowie dem Trägerteil. Im Falle eines Defekts der Sender- und Empfängermittel können die Befestigungsklammern sehr einfach vom Gehäuse entfernt werden, damit die beiden Gehäuseteile wieder gelöst werden können. Dadurch kann eine Beschädigung des Gehäuses während des Öffnens vermieden werden. Im Falle einer Beschädigung einer oder mehrerer Befestigungsklammern können diese ebenfalls sehr einfach durch eine neue Befestigungsklammer ausgetauscht werden. Darüber hinaus ist vorgesehen, dass jede der Befestigungsklammern zwei freie Enden aufweist, die so geformt sind, dass sie bei der Montage in korrespondierende Befestigungsabschnitte des ersten und zweiten Gehäuseteils eingreifen können. Vorzugsweise sind die Befestigungsklammern separate Bauteile. Die Befestigungsabschnitte sind im Wesentlichen nutartig geformt. Es hat sich gezeigt, dass die im Wesentlichen nutartig ausgebildeten Befestigungsabschnitte an den Gehäuseteilen aus fertigungstechnischer Sicht relativ einfach hergestellt werden können. Darüber hinaus weist die erfindungsgemäße Radareinrichtung mindestens ein Dichtungselement auf, geeignet, das Gehäuse entlang seines Außenumfangs abzudichten. Auf diese Weise kann das Eindringen von Feuchtigkeit in das Innere des Gehäuses der Radareinrichtung verhindert werden, so dass eine Beschädigung der Sender- und Empfängermittel durch Nässe und Feuchtigkeit verhindert werden kann. Es besteht beispielsweise auch die Möglichkeit, zwei Dichtungselemente vorzusehen, die vorzugsweise jeweils an einem der beiden Gehäuseteile angebracht sind. Zum Schutz des mindestens einen Dichtungselements und/oder des Trägerteils ist bei der erfindungsgemäßen Radareinrichtung ferner vorgesehen, dass mindestens eines der Gehäuseteile im Bereich des Außenumfangs einen umlaufenden Vorsprung aufweist, der nach der Montage seitlich an das mindestens eine Trägerteil und an das andere Gehäuseteil angrenzt. Dadurch kann verhindert werden, dass zum Beispiel Wasser, das während einer Dichtigkeitsprüfung unter relativ hohem Druck auf das Gehäuse trifft, das mindestens eine Dichtungselement beschädigen kann.

In einer bevorzugten Ausführungsform sind die Befestigungsklammern entlang eines Außenumfangs des Gehäuses angebracht. Dadurch kann die Montage der Radareinrichtung weiter vereinfacht werden.

In einer besonders vorteilhaften Ausführungsform weist mindestens eines der Gehäuseteile im Bereich des Außenumfangs eine umlaufende Nut auf, in der das mindestens eine Dichtungselement angeordnet ist. Diese Nut kann insbesondere die Montage des mindestens einen Dichtungselements an dem jeweiligen Gehäuseteil erleichtern. Das Dichtungselement braucht bei der Montage lediglich in die umlaufende Nut des entsprechenden Gehäuseteils eingesetzt zu werden. Die Befestigungsklammern drücken nach ihrer Anbringung auf Grund ihrer Federkraft die beiden Gehäuseteile, das Trägerteil und damit auch das mindestens eine Dichtungselement zusammen. Dadurch wird eine wirksame Abdichtung des Gehäuses der Radareinrichtung zur Verfügung gestellt.

In einer alternativen Ausführungsform kann auch vorgesehen sein, dass mindestens eines der Dichtungselemente an dem Trägerteil befestigt ist. Beispielsweise kann das mindestens eine Dichtungselement unmittelbar an dem mindestens einen Trägerteil durch Vulkanisieren befestigt sein. Dadurch kann die Montage der Radareinrichtung weiter vereinfacht werden, da die Dichtungselemente nicht mehr als separate Bauelemente vorliegen, sondern bereits auf dem mindestens einen Trägerteil vormontiert sind, bevor das Trägerteil auf das erste Gehäuseteil aufgesetzt wird.

Abschließend soll angemerkt werden, dass das hier beschriebene Gehäuse der Radareinrichtung, bei dem das mindestens eine Trägerteil, an dem elektronische Bauelemente angebracht sind, zwischen dem ersten Gehäuseteil und dem zweiten Gehäuseteil durch eine Anzahl von Befestigungsklammern klemmend festgelegt ist, grundsätzlich auch für andere elektrische Geräte geeignet ist.

### ZEICHNUNGEN

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine Explosionsansicht einer Radareinrichtung gemäß einer bevorzugten Ausführungsform der vorliegenden Erfindung;
- Fig. 2: einen Längsschnitt durch die Radareinrichtung gemäß Fig. 1 nach der Montage;
- Fig. 3: eine Einzelheit III gemäß Fig. 2.

### BESCHREIBUNG DES AUSFÜHRUNGSBEISPIELS

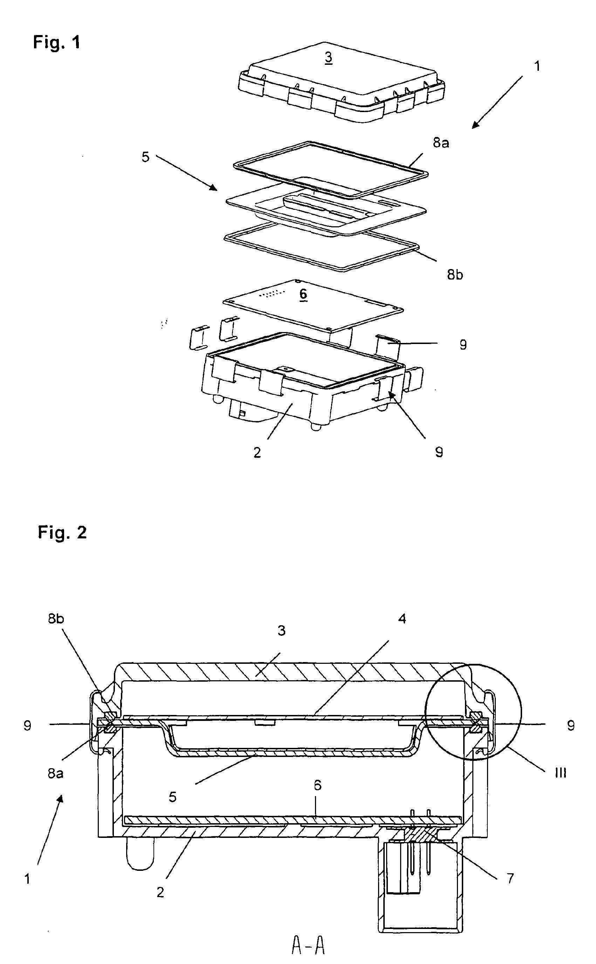

Zunächst wird auf Fig. 1 und Fig. 2 Bezug genommen, die eine Explosionsansicht einer Radareinrichtung 1 gemäß einer bevorzugten Ausführungsform der vorliegenden Erfindung beziehungsweise einen Längsschnitt durch die Radareinrichtung 1 nach der Montage zeigen.

Die Radareinrichtung 1 weist ein Gehäuse auf, das in diesem Ausführungsbeispiel zweiteilig ausgeführt ist. Das Gehäuse umfasst ein erstes Gehäuseteil 2 und ein zweites Gehäuseteil 3, die während der Montage lösbar miteinander verbunden werden und danach einen Hohlraum bilden, in dem Sender- und Empfängermittel 4 untergebracht sind, die für das Senden und Empfangen von Mikrowellenstrahlung während des Betriebs der Radareinrichtung 1 geeignet sind.

Beispielsweise können die Sender- und Empfängermittel 4 für einen Betrieb mit Mikrowellenstrahlung in einem Frequenzbereich von etwa 24 Gigahertz eingerichtet sein. Entsprechend ist insbesondere das zweite Gehäuseteil 3, durch das die Mikrowellenstrahlung während des Betriebs der Radareinrichtung 1 hindurchtritt, aus einem Material hergestellt, das für die eingesetzte Radarstrahlung eine relativ geringe Dämpfung aufweist. Grundsätzlich können die Sender- und Empfängermittel 4 aber auch in einem anderen Frequenzbereich arbeiten.

Die Sender- und Empfängermittel 4 der Radareinrichtung 1, die beispielsweise auf einer Leiterplatte angeordnet sein können, sind an einem Trägerteil 5 angebracht, das in diesem Ausführungsbeispiel mindestens eine Vertiefung aufweist, in die die elektronischen Komponenten der Sender- und Empfängermittel 4 nach der Montage hineinragen können. Beispielweise können die Sender- und Empfängermittel 4 abschnittsweise mit dem Trägerteil 5 verklebt sein. Das Trägerteil 5 kann zum Beispiel ein Kupfer-Tiefziehteil sein.

Ferner umfasst die Radareinrichtung 1 eine Leiterplatte 6, auf der mindestens ein digitales Signalprozessormittel (DSP) zur Verarbeitung der empfangenen Radarsignale angeordnet ist. Die Leiterplatte 6 umfasst die Steuer- und Auswertelektronik, die für den Betrieb der Radareinrichtung 1 benötigt wird. Die Leiterplatte 6 wird bei der Montage der Radareinrichtung 1 auf eine Stiftleiste 7 gepresst, die in einem Bodenabschnitt des ersten Gehäuseteils 2 angeordnet ist. Danach wird die Leiterplatte 6 mit dem ersten Gehäuseteil 2 verschraubt, damit sie sich während des Betriebs Radareinrichtung 1 - insbesondere nach dem Einbau der Radareinrichtung 1 in den Motorraum des Kraftfahrzeugs - nicht ungewollt lösen kann.

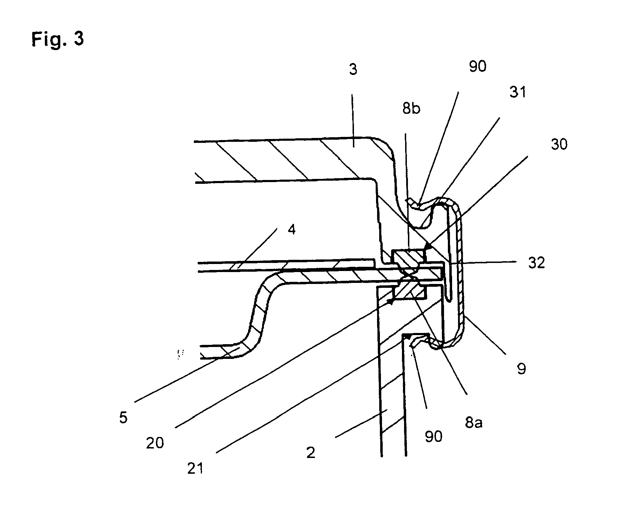

Wie in der Detailansicht in Fig. 3 zu erkennen, weist das erste Gehäuseteil 2 eine Nut 20 auf, die seitlich an die Öffnung des ersten Gehäuseteils 2 angrenzt. Die Nut 20 erstreckt sich in diesem Ausführungsbeispiel entlang des Außenumfangs der Öffnung des ersten Gehäuseteils 2. Korrespondierend dazu weist das zweite Gehäuseteil 3 ebenfalls eine Nut 30 auf, die seitlich an die Öffnung des zweiten Gehäuseteils 3 angrenzt. Die Nut 30 erstreckt sich ihrerseits ebenfalls entlang des Außenumfangs der Öffnung des zweiten Gehäuseteils 3.

In die Nut 20 des ersten Gehäuseteils 2 wird bei der Montage der Radareinrichtung 1 ein erstes Dichtungselement 8a eingesetzt, das in diesem Ausführungsbeispiel geschlossen ausgeführt ist. Anschließend wird das Trägerteil 5, an dem die Sender- und Empfängermittel 4 angebracht sind, auf das erste Gehäuseteil 2, in deren Nut 20 das erste Dichtungselement 8a angeordnet ist, aufgesetzt.

Danach wird in die Nut 30 des zweiten Gehäuseteils 3 ein zweites Dichtungselement 8b eingesetzt, das in diesem Ausführungsbeispiel ebenfalls geschlossen ausgeführt ist. In einem nächsten Montageschritt wird dann das zweite Gehäuseteil 3 auf das Trägerteil 5 aufgesetzt. Abschließend wird das erste Gehäuseteil 2 lösbar mit dem zweiten Gehäuseteil 3 verbunden, indem man entlang des Außenumfangs des Gehäuses der Radareinrichtung 1 eine Anzahl von Befestigungsklammern 9 anbringt, die jeweils eine lösbare, kraft- und formschlüssige Klemmverbindung des ersten Gehäuseteils 2 mit dem zweiten Gehäuseteil 3 zur Verfügung stellen. Das Trägerteil 5 wird also klemmend zwischen dem ersten Gehäuseteil 2 und dem zweiten Gehäuseteil 3 festgelegt.

Jede der Befestigungsklammern 9 weist in diesem Ausführungsbeispiel, wie insbesondere in Fig. 3 zu erkennen, jeweils zwei freie Enden 90 auf, die bei der Montage in entsprechend geformte Befestigungsabschnitte 21, 31, die an den ersten und zweiten Gehäuseteilen 2, 3 ausgebildet sind, eingreifen, um auf diese Weise die lösbare Klemmverbindung zwischen dem ersten Gehäuseteil 2, dem Trägerteil 5 und dem zweiten Gehäuseteil 3 zur Verfügung zu stellen. Die Befestigungsabschnitte 21, 31 sind in diesem Ausführungsbeispiel im Wesentlichen nutartig ausgebildet. In diesem Ausführungsbeispiel sind insgesamt acht Befestigungsklammern 9 vorgesehen, wobei an jeder der vier Außenseiten des Gehäuses jeweils zwei Befestigungsklammern 9 angeordnet sind. Die elastische Federkraft, die jede der Befestigungsklammern 9 zur Verfügung stellt, ermöglicht eine sichere Verbindung des ersten Gehäuseteils 2 mit dem zweiten Gehäuseteil 3 mit dem dazwischen angeordneten Trägerteil 5. Ein Vorteil dieser Verbindungsart besteht insbesondere darin, dass die Verbindung der beiden Gehäuseteile 2, 3 zerstörungsfrei wieder gelöst werden kann, damit zum Beispiel im Falle eines Defekts der Sender- und Empfängermittel 4 oder der Leiterplatte 6 das Gehäuse der Radareinrichtung 1 mit relativ geringem Aufwand wieder geöffnet werden kann.

Die Befestigungsklammern 9 komprimieren darüber hinaus auch die ersten und zweiten Dichtungselemente 8a, 8b, so dass die Dichtungselemente 8a, 8b das Innere des Gehäuses der Radareinrichtung 1 zuverlässig abdichten können und somit vor dem Eindringen von Nässe und Feuchtigkeit schützen.

Man erkennt in der Detailansicht in Fig. 3, dass das zweite Gehäuseteil 3 darüber hinaus entlang seines Außenumfangs einen Vorsprung 32 aufweist, der sich vom zweiten Gehäuseteil 3 in Richtung auf das erste Gehäuseteil 2 weg erstreckt und nach der Montage seitlich an das Trägerteil 5 und das erste Gehäuseteil 2 angrenzt. Der Vorsprung 32 schützt somit das Trägerteil 5 sowie das erste und das zweite Dichtungselement 8a, 8b und kann dadurch verhindern, dass zum Beispiel bei einer Dichtigkeitsprüfung des Gehäuses der Radareinrichtung 1 ein unmittelbar auf diesen Bereich gerichteter Hochdruckwasserstrahl auf die Dichtungselemente 8a, 8b trifft und diese unter Umständen beschädigt, so dass es nachfolgend zu einem Eintritt von Wasser in das Innere des Gehäuses kommen kann. Durch diese Maßnahme können also die Dichtigkeitseigenschaften der hier gezeigten Radareinrichtung 1 weiter verbessert und die Dichtungselemente 8a, 8b besser geschützt werden.

In einer alternativen Ausführungsform der Radareinrichtung 1, die hier nicht explizit gezeigt ist, besteht auch die Möglichkeit, dass die Dichtungselemente 8a, 8b unlösbar oder zumindest nur sehr schwer lösbar in den Randbereichen des Trägerteils 5, an denen die Gehäuseteile 2, 3 nach der Montage anliegen, angebracht werden. Beispielsweise können die Dichtungselemente 8a, 8b durch Vulkanisieren am Trägerteil 5 angebracht werden. Es kann auch vorgesehen sein, dass die Dichtungselemente 8a, 8b auf andere Weise an dem Trägerteil 5 angebracht, insbesondere zumindest abschnittsweise mit diesem verklebt werden. In dieser Variante kann somit auf die als separate Bauteile vorhandenen Dichtungselemente 8a, 8b verzichtet werden, so dass unmittelbar während der Montage der Radareinrichtung 1 die Schritte des Einsetzens der Dichtungselemente 8a, 8b in die entsprechenden Nuten 20, 30 entfallen können.

## Patentansprüche

1. Radareinrichtung (1) für ein Kraftfahrzeug, umfassend:
- ein Gehäuse, das ein erstes Gehäuseteil (2) und mindestens ein zweites Gehäuseteil (3) aufweist,
- Sender- und Empfängermittel (4),
- mindestens ein Trägerteil (5), an dem die Sender- und Empfängermittel (4) angebracht sind,
wobei das mindestens eine Trägerteil (5) zwischen dem ersten Gehäuseteil (2) und dem zweiten Gehäuseteil (3) klemmend festgelegt ist
**dadurch gekennzeichnet,**
- **dass** die Radareinrichtung (1) eine Anzahl von Befestigungsklammern (9) aufweist, geeignet, eine lösbare Klemmverbindung zwischen dem ersten Gehäuseteil (2), dem mindestens einen Trägerteil (5) und dem zweiten Gehäuseteil (3) zur Verfügung zu stellen, wobei jede der Befestigungsklammern (9) zwei freie Enden (90) aufweist, die so geformt sind, dass sie bei der Montage in korrespondierende, im Wesentlichen nutartig ausgebildete Befestigungsabschnitte (21, 31) des ersten und zweiten Gehäuseteils (2, 3) eingreifen können,
- **dass** die Radareinrichtung (1) mindestens ein Dichtungselement (8a, 8b) aufweist, geeignet, das Gehäuse entlang seines Außenumfangs abzudichten, und
- **dass** mindestens eines der Gehäuseteile (2, 3) im Bereich des Außenumfangs einen umlaufenden Vorsprung (32) aufweist, der nach der Montage seitlich an das mindestens eine Trägerteil (5) und das andere Gehäuseteil (2, 3) angrenzt.

2. Radareinrichtung (1) nach Anspruch 1, **dadurch gekennzeichnet, dass** die Befestigungsklammern (9) entlang eines Außenumfangs des Gehäuses angebracht sind.

3. Radareinrichtung (1) nach Anspruch 1 oder 2, **dadurch gekennzeichnet, dass** mindestens eines der Gehäuseteile (2, 3) im Bereich des Außenumfangs eine umlaufende Nut (20, 30) aufweist, in der das mindestens eine Dichtungselement (8a, 8b) angeordnet ist.

4. Radareinrichtung (1) nach einem der Ansprüche 1 bis 3 , **dadurch gekennzeichnet, dass** mindestens eines der Dichtungselemente (8a, 8b) an dem Trägerteil (5) befestigt ist.

## Claims

1. Radar equipment (1) in a motor vehicle, comprising:
- a housing made up of a first part (2) and at least a second part (3),
- transmitter and receiver devices (4),
- at least one carrying element (5) that the transmitter and receiver devices (4) are attached to,
wherein the at least one carrying element (5) is clamped and fixed between the first part of the housing (2) and the second part of the housing (3)
**characterized in that**
- the radar equipment (1) has a number of mounting clips (9) suited to provide a disconnectable clamp connection between the first part of the housing (2), the at least one carrying element (5), and the second part of the housing (3), wherein each of the mounting clips (9) has two free ends (90) shaped such that, during assembly, they will clip in to corresponding and mainly groove-like mounting sections (21, 31) of the first and second parts of the housing (2, 3),
- the radar equipment (1) has at least one sealing element (8a, 8b) suited to seal the housing along its outer circumference, and that
- at least one of the parts of the housing (2, 3) has a circumferential protrusion (32) from its outer circumference such that, after assembly, the protrusion (32) will laterally adjoin to the at least one carrying element (5) and the other part of the housing (2, 3).

2. Radar equipment (1) of claim 1, **characterized in that** the mounting clips (9) are attached to an outer circumference of the housing.

3. Radar equipment (1) of claims 1 or 2, **characterized in that** at least one of the parts of the housing (2, 3) has a circumferential groove (20, 30) along its outer circumference that the at least one sealing element (8a, 8b) rests in.

4. Radar equipment (1) of claims 1 to 3 , **characterized in that** at least one of the sealing elements (8a, 8b) is attached to the carrying element (5).

## Revendications

1. Dispositif radar (1) pour un véhicule, comprenant :
- un boîtier qui présente un premier élément de boîtier (2) et au moins un deuxième élément de boîtier (3),
- un système émetteur et récepteur (4),
- au moins un élément support (5) sur lequel le système émetteur et récepteur (4) est fixé,
au moins un élément support (5) étant fixé par serrage entre le premier élément du boîtier (2) et le deuxième élément du boîtier (3),
**caractérisé en ce que**
- le dispositif radar (1) présente un certain nombre d'attaches de fixation (9) appropriées à réaliser un assemblage par serrage pouvant être défait entre le premier élément du boîtier (2), au moins un élément support (5) et le deuxième élément du boîtier (3), chacune de ces attaches de fixation (9) présentant deux extrémités libres (90), formées de manière qu'elles puissent, lors du montage, entrer en prise dans les sections de fixations (21, 31) correspondantes, essentiellement en forme de rainure du premier et du deuxième éléments de fixation (2, 3),
- le dispositif radar (1) présente au moins un élément d'étanchéité (8a, 8b), approprié à étanchéifier le boîtier le long de sa périphérie externe et
- qu'au moins un des éléments du boîtier (2, 3) présente une saillie (32) de pourtour dans la zone de la périphérie externe, laquelle saillie, après le montage, est voisine d'au moins un élément support (5) et de l'autre élément du boîtier (2, 3).

2. Dispositif radar (1) selon la revendication 1, **caractérisé en ce que** les attaches de fixation (9) sont disposées le long de la périphérie externe du boîtier.

3. Dispositif radar (1) selon la revendication 1 ou 2, **caractérisé en ce qu'**au moins un des éléments de boîtier (2, 3) présente une rainure (20, 30) de pourtour dans la zone de la périphérie externe, rainure dans laquelle se trouve au moins un élément d'étanchéité (8a, 8b).

4. Dispositif radar (1) selon l'une des revendications 1 à 3, **caractérisé en ce qu'**au moins un des éléments d'étanchéité (8a, 8b) est fixé sur l'élément porteur (5).
